## Europäisches Patentamt
## European Patent Office
## Office européen des brevets

(11) Veröffentlichungsnummer: **0 268 153**
**B1**

(12) **EUROPÄISCHE PATENTSCHRIFT**

(45) Veröffentlichungstag der Patentschrift: 30.01.91

(51) Int. Cl.⁵: **B 65 G 61/00**

(21) Anmeldenummer: 87116292.1

(22) Anmeldetag: 05.11.87

(54) Hubförderer, insbesondere Palettierer.

(30) Priorität: 14.11.86 DE 3638991

(43) Veröffentlichungstag der Anmeldung:
25.05.88 Patentblatt 88/21

(45) Bekanntmachung des Hinweises auf die
Patenterteilung:
30.01.91 Patentblatt 91/05

(84) Benannte Vertragsstaaten:
DE FR GB IT

(56) Entgegenhaltungen:
DE-A-2 740 519
DE-B-2 408 797

(73) Patentinhaber: Focke & Co. (GmbH & Co.)
Siemensstrasse 10
D-2810 Verden (DE)

(72) Erfinder: Focke, Heinz
Moorstrasse 64
D-2810 Verden (DE)

(74) Vertreter: Bolte, Erich, Dipl.-Ing. et al
c/o Meissner, Bolte & Partner Patentanwälte
Hollerallee 73
D-2800 Bremen 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Hubförderer, insbesondere Palettierer, gemäß Oberbegriff des Anspruches 1 (bekannt aus der DE-A-2408797).

Hubförderer mit gelenkigem Schwenkarm sind für den Einsatz in vielen technischen Bereichen bekannt als sogenannte Roboter. Zunehmend werden diese auch im Bereich der Verpackungstechnik als Palettierer eingesetzt zur Aufnahme von (Groß-)Packungen bzw. Kartons von einer unteren Ebene, insbesondere von einem Zuförderer und zur selbsttätigen Übergabe an eine oder mehrere Paletten. Die Übernahmeebene für die Gegenstände ist dabei üblicherweise in der Höhe unveränderlich (feststehender Zuförderer). Hingegen verändert sich die Absetzebene für die Gegenstände auf der Palette mit zunehmender Stapelhöhe. Der Schwenkarm muß deshalb jeweils mit einem aufgenommenen Gegenstand und bei der Rückbewegung in die Aufnahmestellung außer einer Schwenkbewegung auch eine Auf- bzw. Abwärtsbewegung durchführen.

Zur Kompensierung des Eigengewichts des Schwenkarms und der mit diesem bewegten Aggregate ist ein Ausgleichsgewicht vorgesehen, welches gegenläufig zum Schwenkarm auf- und abbewegt wird. Das Ausgleichsgewicht kann auch, wie in der DE-A-2408797 so bemessen sein, daß eine (Teil-) Kompensierung der zu fördernden Lasten (Packungen) gegeben ist.

Der Erfindung liegt die Aufgabe zugrunde, die Leistungsfähigkeit derartiger Hubförderer, insbesondere die Arbeitsgeschwindigkeit ohne nennenswerten zusätzlichen Energieaufwand zu erhöhen.

Zur Lösung dieser Aufgabe ist der erfindungsgemäße Hubförderer dadurch gekennzeichnet, daß ein weiteres Ausgleichsgewicht, nämlich eine Zusatzgewicht, vorgesehen ist, welches bei Bedarf, insbesondere bei SchwerlastBetrieb, dem ständig wirksamen Ausgleichsgewicht zuschaltbar ist.

Bei der erfindungsgemäßen Ausbildung des Hubförderers ist die Masse des ständig wirksamen Ausgleichsgewichts begrenzt im wesentlichen auf die Kompensierung des Eigengewichts des Schwenkarms mit den zugeordneten, ständig bewegten Aggregaten. Für die Förderung schwerer Lasten, zum Beispiel von schweren Packungen, ist erfindungsgemäß ein Zusatzgewicht zuschaltbar, welches diese höheren Lasten bei der Aufwärtsbewegung des Schwenkarms mit einer Schwerlast durch entsprechend gegenläufige Bewegung kompensiert. Es ist wichtig, daß das Zusatzgewicht lediglich während der Hubbewegung gewichtsausgleichend wirksam ist. Danach, insbesondere bei der Abwärtsbewegung des Schwenkarms ohne Last, ist das Zusatzgewicht nicht wirksam. Dieses wird vielmehr durch einen gesonderten Antrieb unabhängig von der Rückkehrbewegung des lastfreien Schwenkarms in die (obere) Ausgangsstellung zurückbewegt.

Durch das bedarfsweise zuschaltbare Zusatzgewicht und durch die eigenständige Rückkehr- bzw. Aufwärtsbewegung desselben sind durch den dem Schwenkarm zugeordneten Hubantrieb verhältnismäßig geringe Massen zu bewegen, nämlich der Schwenkarm mit den zugeordneten Aggregaten und das ständig wirksame Ausgleichsgewicht. Dadurch können mit einfachen, knapp bemessenen Antrieben hohe Arbeitsgeschwindigkeiten erreicht werden.

Das Zusatzgewicht ist erfindungsgemäß in einer Ebene parallel und versetzt zum Ausgleichsgewicht auf- und abbewegbar und zur wirksamen Kompensierung einer entsprechenden Last durch Ankuppeln an das Ausgleichsgewicht diesem zuschaltbar. Gemäß vorteilhafter Ausführungsform ist zu diesem Zweck das Zusatzgewicht am oberen Rand mit einer quer abstehenden Nase versehen, die sich auf die Oberseite des Ausgleichsgewichts auflegt und dieses entsprechend belastet.

Das Zusatzgewicht ist an einem Seil oder dergleichen angeordnet, welches unten und oben über eine Umlenkscheibe geführt wird, von denen eine angetrieben ist. Der Antrieb für die Umlenkscheibe und damit für das dem Zusatzgewicht zugeordnete Seil ist abkuppelbar.

Weitere Merkmale der Erfindung betreffen die Ausgestaltung des Zusatzgewichts und des Antriebs für den Schwenkarm, das Ausgleichsgewicht sowie das Zusatzgewicht.

Ein Ausführungsbeispiel der Erfindung wird nachfolgend anhand der Zeichnungen näher erläutert. Es zeigt:

Fig. 1 einen Hubförderer bzw. einen Palettierer in Seitenansicht unter Darstellung der Zuordnung zu einem Zuförderer und zu einem Stapelplatz;

Fig. 2 den Hubförderer nach Fig. 1 in Vorderansicht bzw. vom Zuförderer aus gesehen, teilweise mit weggebrochener Verkleidung;

Fig. 3 den Hubförderer nach Fig. 1 bzw. 2 im Schnitt längs Linie III—III in Fig. 1 unter gleichzeitiger Draufsicht auf den Zuförderer und zwei beidseits des Hubförderers angeordnete Stapelplätze.

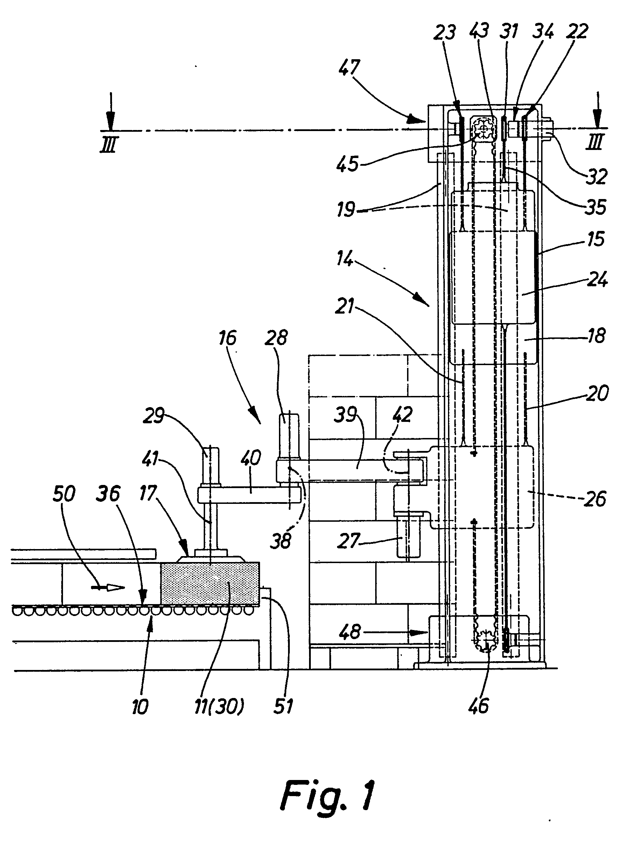

Die in den Fig. 1 bis 3 dargestellte Fördereinrichtung ist ein Palettierer mit einem Zuförderer 10 für Gegenstände, insbesondere Zigaretten-Großgebinde, im folgenden Packungen 11 genannt, einerseits und zwei Stapelplätzen 12 und 13 andererseits zugeordneten Stapler 14, bestehend aus einem Gestell bzw. Rahmen 15 mit Vertikalführung für einen vertikal auf- und abverfahrbaren Lastträger, hier Schwenkarm 16, an dessen freiem Ende ein Saugkopf 17 zur Erfassung und Freigabe der Packungen 11 angeordnet ist. Die Vertikalführung für den Schwenkarm 16 wird durch zwei aufrechte Säulen 19 gebildet. Dem Schwenkarm 16 ist ein beim Auf- und Abfahren permanent wirksames und dabei jeweils gegenläufiges Ausgleichsgewicht 18 zugeordnet, welches im Rahmen 15 vertikal geführt ist (nut- und federartige Vertikalführung 52) und welches über zwei Seile 20, 21, die um zwei im Kopfteil des Rahmens 15 drehbar gelagerte Umlenkscheiben 22, 23 herumgeführt sind, mit dem Schwenkarm 16 verbunden ist. Demnach bewegt sich das Ausgleichsgewicht 18 nach unten, sobald sich der Schwenkarm 16 nach oben bewegt und umgekehrt. Schwenkarm 16 und zugehöriges Ausgleichsgewicht 18 sind also stets gegenläufig.

Im Rahmen 15 ist ein weiteres Zusatzgewicht 24 vertikal verschieblich gelagert (nut- und federartige Linearlager 25). Dieses weitere Zusatzgewicht 24 ist dem Ausgleichsgewicht 18 bei Bedarf zuschaltbar, wobei die Zuschaltung nur bei einer Hubbewegung des Schwenkarmes 16 stattfindet. Das permanent mit dem Schwenkarm 16 verbundene und damit permanent wirksame Ausgleichsgewicht 18 entspricht etwa dem Gewicht des Schwenkarmes 16 samt Konstruktionsperipherie, wie Saugkopf 17, Vertikallager 26, Schwenkantriebe 27, 28 und 29 einschließlich entsprechender Verkabelung, sowie dem Gewicht einer Leichtlast-Packung, z.B. eines Zigarettengebindes.

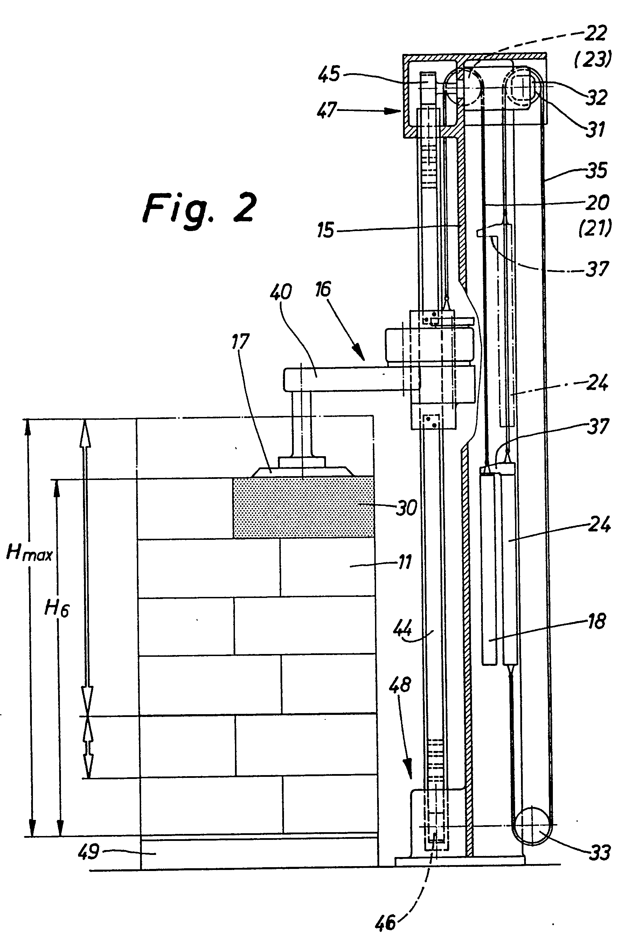

Das Zusatzgewicht 24 entspricht etwa dem Gewicht einer Schwerlast-Packung, wie sie in Fig. 2 mit der Bezugszahl 30 gekennzeichnet ist. Dabei kann es sich um eine Packung für Glas- oder Keramikgegenstände handeln.

Das Zusatzgewicht 24 ist mit einem über eine obere, im Kopfteil des Rahmens 15 drehbar gelagerte Umlenkscheibe 31 und um eine untere, d.h. im Sockelteil des Rahmens 15 drehbar gelagerte Umlenkscheibe 33, herumgeführtes Seil 35 verbunden, wobei der oberen Umlenkscheibe 31 ein Antrieb 32, insbesondere Elektromotor oder Hydraulikantrieb, zugeordnet ist, der über eine Schaltkupplung, hier Magnetschaltkupplung 34, an die zugeordnete Umlenkscheibe 31 unter Übertragung einer entsprechenden Drehbewegung ankuppelbar ist.

Mittels des Antriebs 32 ist das Zusatzgewicht 24 entsprechend der strichpunktierten Darstellung in Fig. 2 vom Ausgleichsgewicht 18 entkoppelbar und in eine angehobene Wartestellung (in Fig. 2 strichpunktierte Stellung des Zusatzgewichtes 24) bringbar, und zwar nachdem der Schwenkarm 16 die vorgegebene Stapelhöhe, in Fig. 2: H, erreicht hat. Vorzugsweise wird bei Ausführung einer Schwenkbewegung durch einen der dem Schwenkarm 16 zugeordneten Schwenkantriebe 27, 28 und/oder 29 ein Steuersignal für die Magnetschaltkupplung 34 ausgelöst, derart, daß diese kuppelt und eine Drehverbindung zwischen dem Antrieb 32 und der diesem Antrieb zugeordneten Umlenkscheibe 31 herbeiführt. Der Antrieb 32 ist beim Stapeln von Schwerlast-Packungen aktiviert, dahingehend, daß er mit Ausnahme der Zeit, in der sich das Zusatzgewicht 24 in der angehobenen Wartestellung befindet, ständig in einer Richtung dreht, die bei Verbindung des Antriebs mit der zugeordneten Umlenkscheibe 31 ein Anheben des Zusatzgewichts 24 in die obere Wartestellung (in Fig. 2 strichpunktiert dargestellt) bedingt. Dabei erfolgt automatisch eine Entkoppelung zwischen dem Zusatzgewicht 24 und dem Ausgleichsgewicht 18.

Der Antrieb 32 bzw. die diesem Antrieb zugeordnete Magnetschaltkupplung 34 gibt das Zusatzgewicht 24 in der angehobenen Wartestellung (in Fig. 2 strichpunktiert dargestellt) zur Ankoppelung an das Ausgleichsgewicht 18 wieder frei, sobald dieses sich in seiner angehobenen Stellung entsprechend der abgesenkten Stellung des Schwenkarmes 16 zur Erfassung einer neuen Packung 11 bzw. 30 befindet. Die den entspre-chenden Steuerimpuls für die Magnetschaltkupp-lung 34 auslösende abgesenkte Stellung des Schwenkarmes 16 ist durch die Zuförderebene 36 plus Höhe der zu stapelnden Packungen 11 bzw. 30 bestimmt (siehe Fig. 1).

Sollen nur Leichtgewicht-packungen gestapelt werden, bleibt das Zusatzgewicht 24 in der in Fig. 2 strichpunktiert dargestellten oberen Wartestellung. Die Magnetschaltkupplung 34 befindet sich in Kuppelstellung; der Antrieb 32 ist deaktiviert und hält dementsprechend das Zusatzgewicht 24 in der angehobenen Wartestellung.

Selbstverständlich wird bei Schwerlast-Betrieb das Zusatzgewicht 24 erst ab einer Stapelhöhe zugeschaltet, die oberhalb der Zuförderebene 36 liegt.

Wie die Fig. 1 bis 3 erkennen lassen, sind die beiden Ausgleichsgewichte, also das Ausgleichsgewicht 18 und das Zusatzgewicht 24, innerhalb des Rahmens 15 jeweils vertikal und parallel zueinander bewegbar, wobei das Zusatzgewicht 24 an seiner oberen, dem Ausgleichsgewicht 18 zugewandten Seite eine vorspringende Nase 37 aufweist, mit der sich das Zusatzgewicht 24 nach vorheriger Entkoppelung von dem ihm zugeordneten Antrieb 32 am Ausgleichsgewicht 18 unter Mitbewegung mit diesem (siehe Fig. 2) bzw. entsprechender zusätzlicher Belastung desselben abstützt. Dieser Koppelungs- und Entkoppelungs-Mechanismus ist äußerst einfach und dementsprechend störunanfällig bzw. funktionssicher.

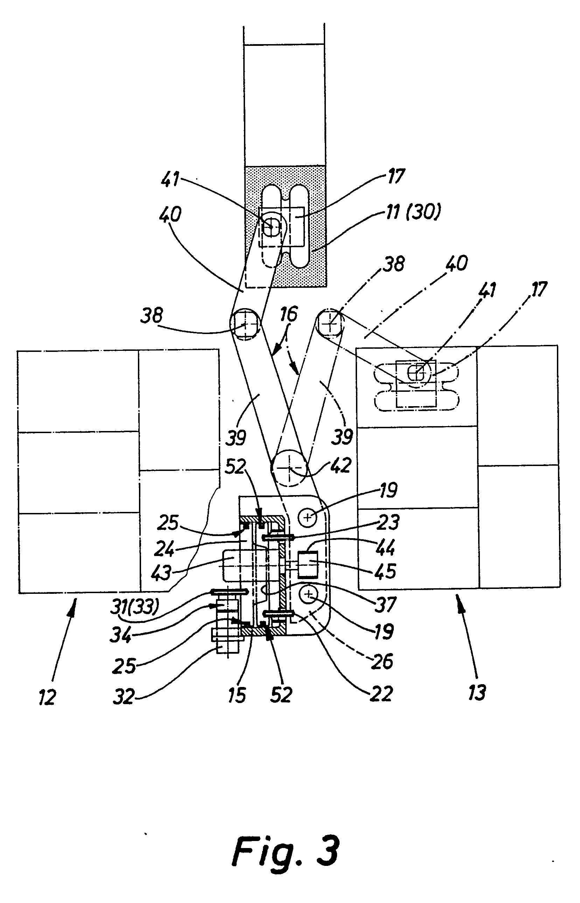

Wie die Fig. 1 und 3 sehr gut erkennen lassen, ist der Schwenkarm 16 als Knick-Schwenkarm mit zwei um eine sich senkrecht zur Schwenkebene erstreckende Achse 38 verschwenkbaren Armen 39, 40 ausgebildet. Der genannten Schwenkachse 38 ist ein gesonderter Schwenkantrieb 28, vorzugsweise in Form eines Elektromotors, zugeordnet. Am freien Ende des äußeren Armes 40 ist der Saugkopf 17 gelagert, und zwar ebenfalls um eine vertikale Achse 41 verschwenkbar, wobei zum Verschwenken des Saugkopfes 17 um die Achse 41 wiederum ein gesonderter Antrieb, insbesondere Elektroantrieb 29, vorgesehen ist.

Der innere bzw. dem Hubrahmen 15 zugeordnete Arm 39 ist am Vertikallager 26 des Schwenkarmes 16 ebenfalls um eine vertikale Achse 42 schwenkbar gelagert, wobei die Schwenkbewegung durch einen Antrieb 27, vorzugsweise wiederum Elektroantrieb, bewirkt wird. Auf diese Weise sind die beiden beidseits des Staplers 14 angeordneten Stapelplätze 12 und 13 gut bedienbar (siehe Fig. 3). Bei entsprechender Programmierung der Schwenkantriebe 27, 28, 29 in Verbindung mit der Hubbewegung des Schwenkarmes 16 ist ein regelrechter Palettier-Roboter geschaffen. Die Hub- und Senkbewegung des Schwenkarmes 16 längs der Führungssäulen 19 erfolgt durch einen gesonderten Antrieb 43, der im Kopfteil des Rahmens 15 angeordnet ist, wobei die Verbindung zwischen diesem Antrieb und dem Schwenkarm 16 durch einen Zahnriemen 44 hergestellt ist, der über ein dem Antrieb 43 zugeordnetes Ritzel 45 einerseits und eine im Sockelteil des Rahmens 15 drehbar gelagerte Zahnscheibe 46 andererseits herumgeführt ist und dessen freie Enden jeweils am Vertikallager 26 des Schwenkarmes 16 angeschlossen sind.

In Fig. 1 und 2 sind der Kopfteil sowie Sockelteil des Hubrahmens 15 jeweils mit den Bezugsziffern 47 bzw. 48 gekennzeichnet. In Fig. 2 ist noch die maximale Stapelhöhe $H_{max}$ dargestellt.

Im konkreten Fall stehen die gestapelten Packungen 11 bzw. 30 jeweils auf Paletten 49.

Der in Fig. 1 dargestellte Zuförderer 10 ist ein Horizontal-Zuförderer, und zwar Rollenförderer. Die Zuförderrichtung ist durch den pfeil 50 gekennzeichnet. Dabei erfolgt die Zuförderung der packungen 11 bzw. 30 in Dichtlage. Die vorderste Packung 11 bzw. 30 wird durch einen in die Bewegungsbahn des Zuförderers 10 hineinragenden Anschlag 51 in Abholposition gehalten.

Statt eines Saugkopfes 17 kann auch eine Greifeinrichtung vorgesehen sein. Dies hängt nicht zuletzt von den zu stapelnden Gegenständen ab.

Statt des beschriebenen Schwenkarmes 16 kann ein ganz gewöhnlicher Auslegearm, z.B. auch Teleskoparm, oder eine andere Lastträgereinrichtung vorgesehen sein.

## Patentansprüche

1. Hubförderer für Lasten, insbesondere Palettierer für stapelbare Gegenstände, wie quaderförmige packungen (11; 30), unterschiedlichen Gewichts, mit einem auf- und abbewegbaren Lastträger, insbesondere einem gelenkigen Schwenkarm (16), an dessem freiem Ende Mittel (Saugkopf 17) zum Erfassen der Lasten (11; 30) angeordnet sind, und dem ein bei der Auf- und Abbewegung wirksames und dabei jeweils gegenläufiges Ausgleichsgewicht (18) zugeordnet ist, dadurch gekennzeichnet, daß ein weiteres Ausgleichsgewicht, nämlich ein Zusatzgewicht (24) vorgesehen ist, welches bei Bedarf, insbesondere bei Schwerlast-Betrieb, dem permanent wirkenden Ausgleichsgewicht (18) zuschaltbar ist.

2. Hubförderer nach Anspruch 1, dadurch gekennzeichnet, daß das Zusatzgewicht (24) lediglich während der Hub- (Aufwärts-) Bewegung des Schwenkarms (16) wirksam ist.

3. Hubförderer nach Anspruch 1 oder 2, dadurch gekennzeichnet, daß das Ausgleichsgewicht (18) etwa das Gewicht des Schwenkarms (16) samt mit diesem mitbewegter Konstruktionsperipherie (wie Mittel zum Erfassen der Packungen; Vertikallager 26; Schwenkantriebe 27, 28, 29 etc.) sowie gegebenenfalls das Gewicht einer Leicht last-Packung (11) und das Zusatzgewicht (24) etwa das Gewicht der Last, insbesondere einer Schwerlast-Packung (30) kompensiert.

4. Hubförderer nach einem der Ansprüche 1 bis 3, dadurch gekennzeichnet, daß das Zusatzgewicht (24) an das Ausgleichsgewicht (18) ankoppelbar und vor der Rückbewegung des Ausgleichgewichts (18) in die (obere) Ausgangsstellung abkoppelbar ist.

5. Hubförderer nach einem der Ansprüche 1 bis 4, dadurch gekennzeichnet, daß dem Zusatzgewicht (24) ein gesonderter Antrieb (32) zugeordnet ist, durch den das Zusatzgewichtgewicht (24) nach Abkopplung vom Ausgleichsgewicht (18) in eine (angehobene) Ausgangsstellung förderbar ist, nachdem der Schwenkarm (16) eine vorgebene Stapelhöhe ($H_6$) erreicht hat.

6. Hubförderer nach Anspruch 5, dadurch gekennzeichnet, daß der dem Zusatzgewicht (24) zugeordnete Antrieb (32) dieses in der (oberen) Ausgangsstellung zur Ankopplung an das ständig wirksame Ausgleichsgewicht (18) freigibt, sobald das Ausgleichsgewicht (18) sich in seiner angehobenen Stellung entsprechend der abgesenkten Stellung des Schwenkarms (16) zur Erfassung einer neuen Packung (11; 30) befindet.

7. Hubförderer nach Anspruch 5 oder 6, dadurch gekennzeichnet, daß das Zusatzgewicht (24) mit einem über eine obere Umlenkscheibe (31) und über eine untere Umlenkscheibe (33) geführtes Seil (35) oder dergleichen verbunden ist, wobei vorzugsweise der oberen Umlenkscheibe (31) ein Antrieb (32), insbesondere Elektro- oder Hydraulikantrieb, zugeordnet ist, der über eine Schaltkupplung, insbesondere Magnetschaltkupplung (34), an die zugeordnete Umlenkscheibe (31) ankuppelbar ist.

8. Hubförderer nach Anspruch 1, sowie einem oder mehreren der weiteren Ansprüche, dadurch gekennzeichnet, daß das Zusatzgewicht (24) durch Formschluß an das Ausgleichsgewicht (18) ankuppelbar ist.

9. Hubförderer nach Anspruch 8, dadurch gekennzeichnet, daß sich das Zusatzgewicht (24) in der für den Gewichtsausgleich wirksamen Stellung mit einem Vorsprung auf dem Ausgleichsgewicht (18) abstützt, insbesondere mit einer quer abstehenden Nase am oberen Randbereich, die sich auf den oberen Rand des Ausgleichsgewichts (18) auflegt und bei Abwärtsbewegung auf dem Ausgleichsgewicht (18) lastet.

10. Hubförderer nach Anspruch 1 sowie einem oder mehreren der weiteren Ansprüche, dadurch gekennzeichnet, daß das Zusatzgewicht (24) erst von einer Stapelhöhe zuschaltbar ist, die oberhalb einer Zuförderebene (36) der Gegenstände liegt.

11. Hubförderer nach Anspruch 1 sowie einem oder mehreren der weiteren Ansprüche, dadurch gekennzeichnet, daß das Ausgleichsgewicht (18) und das Zusatzgewicht (24) innerhalb eines gemeinsamen Rahmens (15) in parallelen Ebenen aufund abbewegbar sind.

## Revendications

1. Transporteur élévateur de charges, en particulier palettiseur d'objets gerbables, tels que paquets parallélépipédiques (II; 30), de différents poids, comportant un porte-charge pouvant monter et descendre, en particulier un bras pivotant articulé (16), à l'extrémité libre duquel sont placés des moyens (ventouse 17) de saisie des charges

7 EP 0 268 153 B1 8

(11; 30) et auquel est adjoint un contrepoids (18) agissant à la montée et à la descente et se déplaçant à chacune en sens contraire, caractérisé par le fait qu'il est prévu un autre contrepoids, à savoir un poids supplémentaire (24), qui peut au besoin, en particulier en cas de fonctionnement avec de lourdes charges, être additionné au contrepoids (18) qui agit en permanence.

2. Transporteur élévateur selon la revendication 1, caractérisé par le fait que le poids supplémentaire (24) agit seulement pendant la montée du bras pivotant (16).

3. Transporteur élévateur selon l'une des revendications 1 et 2, caractérisé par le fait que le contrepoids (18) compense à peu près le poids du bras pivotant (16) avec les organes périphériques mus avec celui-ci (tels que moyens de saisie des paquets, palier vertical 26, commandes de pivotement 27, 28, 29, etc.) et éventuellement le poids d'un paquet léger (11), et le poids supplémentaire (24) compense à peu près le poids de la charge, en particulier d'un paquet lourd (30).

4. Transporteur élévateur selon l'une des revendications 1 à 3, caractérisé par le fait que le poids supplémentaire (24) peut être accouplé au contrepoids (18) et être désaccouplé avant le retour du contrepoids (18) en position initiale (supérieure).

5. Transporteur élévateur selon l'une des revendications 1 à 4, caractérisé par le fait qu'au poids supplémentaire (24) est adjoint un dispositif moteur séparé (32) qui permet de mettre ce poids (24), après désaccouplement du contrepoids (18), dans une position initiale (haute) après que le bras pivotant (16) a atteint une hauteur de pile fixée ($H_6$).

6. Transporteur élévateur selon la revendication 5, caractérisé par le fait que le dispositif moteur (32) adjoint au poids supplémentaire (24) libère celui-ci en position initiale (supérieure) pour son accouplement au contrepoids agissant en permanence (18) dès que celui-ci se trouve dans sa position haute correspondant à la position basse du bras pivotant (16) pour la saisie d'un nouveau paquet (11; 30).

7. Transporteur élévateur selon l'une des revendications 5 et 6, caractérisé par le fait que le poids supplémentaire (24) est attaché à un câble (35) ou à un élément semblable qui passe sur une poulie de renvoi supérieure (31) et sur une poulie de renvoi inférieure (33), un dispositif moteur (32), en particulier électrique ou hydraulique, étant de préférence adjoint à la poulie de renvoi supérieure (31) et pouvant être accouplé à cette poulie (31) par un embrayage, en particulier un embrayage magnétique (34).

8. Transporteur élévateur selon la revendication 1 et une ou plusieurs des autres revendications, caractérisé par le fait que le poids supplémentaire (24) peut être accouplé au contrepoids (18) par emboîtement.

9. Transporteur élévateur selon la revendication 8, caractérisé par le fait que le poids supplémentaire (24), en position active pour l'équilibrage du poids, s'appuie sur le contrepoids (18) par une saillie, en particulier par un talon saillant transversalement (37) prévu dans la zone du bord supérieur qui s'applique sur le bord supérieur du contrepoids (18) et, à la descente, pèse sur ce dernier.

10. Transporteur élévateur selon la revendication 1 et une ou plusieurs des autres revendications, caractérisé par le fait que le poids supplémentaire (24) peut être additionné seulement à partir d'une hauteur de pile située au-dessus d'un plan (36) d'amenée des objets.

11. Transporteur élévateur selon la revendication 1 et une ou plusieurs des autres revendications, caractérisé par le fait que le contrepoids (18) et le poids supplémentaire (24) peuvent monter et descendre dans des plans parallèles à l'intérieur d'un bâti commun (15).

## Claims

1. Elevator for loads, especially a palletiser for stackable articles, such as cuboid packs (11; 30), of differing weight, with a load carrier which can be moved up and down, especially an articulated pivoting arm (16), at the free end of which means (suction head 17) for grasping the loads (11; 30) are arranged and to which is assigned a balancing weight (18) taking effect during the up-and-down movement and at the same time running respectively in the opposite direction, characterized in that there is a further balancing weight, in particular an auxiliary weight (24), which can be connected to the continuously effective balancing weight (18), if necessary, especially during heavy-duty operation.

2. Elevator according to Claim 1, characterized in that the auxiliary weight (24) takes effect only during the lifting (upward) movement of the pivoting arm (16).

3. Elevator according to Claim 1 or 2, characterized in that the balancing weight (18) compensates approximately the weight of the pivoting arm (16), as well as peripheral constructional parts also moved with this (such as means for grasping the packs, vertical bearings 26, pivoting drives 27, 28, 29, etc.), and, if appropriate, the weight of a light pack (11), and the auxiliary weight (24) compensates approximately the weight of the load, especially a heavy pack (30).

4. Elevator according to one of Claims 1 to 3, characterized in that the auxiliary weight (24) can be coupled to the balancing weight (18) and can be uncoupled before the return movement of the balancing weight (18) into the (upper) initial position.

5. Elevator according to one of Claims 1 to 4, characterized in that assigned to the auxiliary weight (24) is a separate drive (32), by means of which the auxiliary weight (24), after being uncoupled from the balancing weight (18), can be transported into a (raised) initial position, after the pivoting arm (16) has reached a predetermined stack height ($H_6$).

6. Elevator according to Claim 5, characterized in that the drive (32) assigned to the auxiliary weight (24) releases the latter in the (upper) initial position, for coupling to the continuously effective balancing weight (18), as soon as the balancing weight (18) is in its raised position corresponding to the lowered position of the pivoting arm (16) for grasping a new pack (11; 30).

7. Elevator according to Claim 5 or 6, characterized in that the auxiliary weight (24) is connected to a rope (35) or the like guided over an upper deflecting pulley (31) and over a lower deflecting pulley (33), the upper deflecting pulley (31) preferably having assigned to it a drive (32), especially an electrical or hydraulic drive, which can be coupled to the associated deflecting pulley (31) via a shifting clutch, especially a magnetic shifting clutch (34).

8. Elevator according to Claim 1 and one or more of the further claims, characterized in that the auxiliary weight (24) can be coupled to the balancing weight (18) by means of a positive connection.

9. Elevator according to Claim 8, characterized in that the auxiliary weight (24), in the position effective for weight balancing, is supported on the balancing weight (18) by means of a projection, especially by means of a transversely projecting nose which is located in the upper edge region and which comes to rest on the upper edge of the balancing weight (18) and exerts a load on the balancing weight (18) during the downward movement.

10. Elevator according to Claim 1 and one or more of the further claims, characterized in that the auxiliary weight (24) can be connected only from a stack height which is above a feed plane (36) for the articles.

11. Elevator according to Claim 1 and one or more of the further claims, characterized in that the balancing weight (18) and the auxiliary weight (24) can bemoved up and down in parallel planes within a common frame (15).

Fig. 1

# Fig. 2

Fig. 3